# EUROPÄISCHE PATENTSCHRIFT

(11) **EP 0 277 937 B1**
(45) Veröffentlichungstag und Bekanntmachung des Hinweises auf die Patenterteilung: **28.04.1993**
(21) Anmeldenummer: 88890020.6
(22) Anmeldetag: 01.02.1988
(51) Int. Cl.: H01M 10/44, H01M 10/36

(54) **Verfahren zum Abbau ungleichmässiger Abscheidungen an Elektroden einer Batterie**
Method for dissolving irregular deposits on the electrodes of a battery
Méthode pour la dissolution de dépôts irréguliers sur les électrodes d'une batterie

(30) Priorität: 02.02.1987 AT 202/87
(43) Veröffentlichungstag der Anmeldung: 10.08.1988
(73) Patentinhaber: S.E.A. Studiengesellschaft für Energiespeicher und Antriebssysteme Gesellschaft m.b.H., A-8680 Mürzzuschlag (AT)
(72) Erfinder: Tomazic, Gerd, Dr., Dipl.-Ing., A-8680 Mürzzuschlag (AT)
(74) Vertreter: Widtmann, Georg, Dr.

(56) Entgegenhaltungen:
- EP-A- 207 522
- EP-A- 0 135 056
- EP-A- 0 190 078
- EP-A- 0 204 038

## Beschreibung

Die Erfindung bezieht sich auf ein Verfahren zum Abbau ungleichmäßiger Schichtstärken, einer metallischen Schicht an Elektroden eines Akkumulators.

Bei wiederaufladbaren galvanischen Elementen, bei welchen Metalle, z. B. Zink, Silber, Cadmium u. dgl., als elektrochemisch wirksame Substanz dienen und bei der Ladung abgeschieden werden und bei der Entladung in Lösung gehen, ist eine uniforme Abscheidung der Metalle an den Elektrodenflächen von hoher Bedeutung. Bei einer hohen Zyklenanzahl besteht die Gefahr, daß auch nur geringste elektrische bzw. geometrische Abweichungen zu unterschiedlichen Abscheidungen führen, wodurch die Strömungen des Elektrolyten im Elektrodenraum unregelmäßig bzw. asymmetrisch werden und Störungen bzw. Leistungsabfall bewirken.

Aus der US-PS 42 87 267 ist es bereits bekannt, bei einer Zink-Chlor-Batterie derartige schadhafte Einzelzellen aus dem elektrischen Verband abzuschalten und auch jegliche Versorgung mit dem Elektrolyten zu unterbrechen. Diese Vorgangsweise bedingt damit eine dauerhafte Reduzierung der Kapazität der Batterie.

Aus der EP-A 1-0135 056 wird ein weiteres Verfahren zum Abbau von ungleichmäßigen Abscheidungen an Elektroden bekannt, wobei jeweils eine Einzelbatterie über einen elektrischen Widerstand kurzgeschlossen wird. Dieser Kurzschluß wird aufrecht erhalten, bis kein Strom mehr fließt. Ein derartiges Verfahren weist jedoch den wesentlichen Nachteil auf, daß einerseits nicht sicher gestellt ist, daß die gesamten Abscheidungen aufgelöst werden, da lediglich die Gesamtspannung der Einzelbatterie Null beträgt, wohingegen die Potentialunterschiede zwischen den einzelnen Elektroden durchaus Potentiale größer oder kleiner als Null aufweisen können und es lediglich erforderlich ist, daß das Gesamtpotential Null ist. Weiters gehen nur jene metallischen Abscheidungen in Lösung, die mit der Elektrode in Verbindung sind. Dendritenbruchstücke, die beispielsweise die Zu- und Abflußöffnungen verstopfen können oder die am Diaphragma abgelagert sind, können auf diese Weise nicht beseitigt werden. Weiters besteht die große Gefahr, daß durch eine derartige Auflösung über Kurzschluß es zu Ablösungen an den Elektroden kommt, sodaß Metallfilme innerhalb der Elektrodenräume zu Boden sinken, wodurch die Störungsanfälligkeit noch wesentlich erhöht wird.

Die vorliegende Erfindung hat sich zum Ziel gesetzt, ein Verfahren zu schaffen, welches ein Regenerieren von Batterien ermöglicht, wobei nicht nur eine Auflösung der Abscheidungen an den Elektroden erfolgen kann, sondern auch eine vollständige Auflösung der metallischen Abscheidungen von Zink-Dendritenstücken in den Elektrodenräumen ermöglicht wird.

Das erfindungsgemäße Verfahren ergibt sich aus Anspruche 1.

Durch eine derartige Vorgangsweise kann des gesamte im Elektrodenraum vorhandene Metall, gleichgültig, ob es mit der Elektrode verbunden ist, aufgelöst werden, wobei eine Zufuhr von Fremdionen zu den Elektrolyten und eine Änderung der Metallionenkonzentration in der Elektrolytflüssigkeit sicher vermieden werden kann.

Erfolgt die Zufuhr des Anions inoxidierter Form bis zur vollstängigen Auflösung der metallischen Schicht, so ist eine vollständige Regenerierung der Elektrode erreicht, sodaß das Zellenpaket wieder störungsfrei für eine hohe Anzahl von Zyklen zur Verfügung steht.

Wird mit der Zufuhr des Anions in oxidierter Form die Stromzu- bzw. -ableitung unterbrochen, so kann ein störungsfreier Betrieb der restlichen Zellen bzw. der restlichen Zellenpakete ermöglicht werden. Wird zumindest eine Elektrolytflüssigkeit in Umlauf gehalten, so kann auf besonders einfache Art und Weise eine Kühlung des Elektrodenraumes erreicht werden, wobei gleichzeitig beispielsweise jene Elektrolyflüssigkeit zum Spülen verwendet werden kann, die bereits das Anion, z. B. Brom in oxidierter Form, enthält.

Wird die Temperatur der in den/die Elektrodenräumen mit metallischen Abscheidungen ein- und austretenden Elektrolytflüssigkeit bestimmt, so kann aufgrund der Temperaturdifferenz festgestellt werden, ob noch Metall aufgelöst wird. Zum Ende der exothermen Reaktion weist die eintretende Flüssigkeit die Temperatur der austretenden Flüssigkeit auf, womit ein vollständiges Auflösen des Metalles angezeigt wird.

Ein besonders störungsfreier Betrieb der Batterie, z. B. für den Einsatz in der Traktion, ergibt sich dann, wenn bei zwei oder mehreren elektrisch zueinander parallel geschalteten Batterien bzw. Zellenpaketen zumindest eine Batterie bzw. Zellenpaket zum Abbau der Abscheidungen von den übrigen elektrisch isoliert wird.

Im folgenden wird die Erfindung anhand eines Beispieles näher erläutert:
Obwohl sich das Ausführungsbeispiel auf eine Zink-Brom-Batterie bezieht, kann die vorliegende Erfindung auch auf andere Systeme wie z. B. Zink-Chlor, insbesondere auf Kombinationen Metall und Halogene, Anwendung finden.

Vier Zellenpakete sind mit je 78 bipolaren Elektroden, die jeweils über Diaphragmen voneinander getrennt sind, wobei die Elektroden in einem Zellenpaket jeweils in Reihe geschalten sind, sind elektrisch parallelgeschaltet. Die jeweiligen Kathoden- und Anordenräume weisen jeweils Zufuhr- bzw. Ableitungsöffnungen auf, die mit entsprechenden Rohrleitungen für den Katholyten bzw. Anolyten, also den jeweiligen Elektrolytflüssigkeiten, verbunden sind. In den Reservoirs sind Pumpen für das Umpumpen der Elektrolytflüssigkeit vorgesehen.

Alle vier Zellenpakete sind vollständig geladen. Zum Abbau sämtlicher metallischen Abscheidungen eines Zellenpaketes wird dieses von den übrigen elektrisch isoliert, sodaß lediglich drei Zellenpakete parallel zueinander geschalten sind. Die beiden Elektrolytflüssigkeiten weisen folgende Zusammensetzung auf:
1. ein-molare wässrige Zink-Bromid-Lösung
2. Suspension aus einer einmolaren wässrigen Zink-Bromidlösung mit einem zweimolaren Brom-Komplex mit Morpholiniumbromid.

Dem Elektrodenraum, der die metallischen Abscheidungen aufweist, wird nunmehr die Brom in elementarer Form enthaltende Elektrolytflüssigkeit zugeführt, wobei die Eintritts- und Austrittstemperatur des Elektrolyten gemessen wird. Die Temperaturdifferenz betrug zu Beginn des Auflösens der Abscheidungen 6 ° C, nach 8 Stunden war keine Temperaturdifferenz mehr zu beobachten, sodaß sämtliche metallische Abscheidungen aufgelöst waren.

Es wurde das Zellenpaket, welches aus thermoplastischem Kunststoff aufgebaut war, zerlegt, wobei weder in den Elektrodenräumen noch in den Zu- und Abfuhrleitungen metallische Rückstände gefunden werden konnten. Eine vollständige Regenerierung der Elektroden sowie der Elektrodenräumezu- und -ableitungen war damit erreicht.

Anstelle der unterschiedlichen Anspeisung können auch Diaphragmen eingesetzt werden, die eine höhere Durchlässigkeit für das oxidierte Anion, beispielsweise das Brom, aufweisen, wodurch über eine längeren Zeitraum ebenfalls eine vollständige Oxidation des Metalles erreicht werden kann. Eine andere Möglichkeit besteht auch darin, daß das Anion in oxidierter Form nicht aus der Elektrolytflüssigkeit, sondern zusätzlich dem Elektrodenraum zugeführt wird. Dadurch wird eine Erhöhung der Anionenkonzentration bedingt. Wird jedoch die chemische Reaktivierung eines Zellenpaketes dann durchgeführt, wenn durch den normalen Entladungsprozeß das Zellenpaket nur mehr eine geringfügige Kapazität aufweist, so kommt es lediglich zu einer geringen Konzentrationsänderung.

## Patentansprüche

1. Verfahren zum Abbau ungleichmäßiger Abscheidungen, z.B. unterschiedliche Stärken einer metallischen Schicht an Elektroden eines Akkumulators, insbesondere Zink-Brom-Akkumulator, welche Abscheidungen bei der Speicherung von Strom abgeschieden und bei der Entnahme von Strom zumindest teilweise in den Elektrolyten in Lösung gehen, wobei während der Speicherung und der Entnahme von Strom die Elektrolytflüssigkeiten in Umlauf gehalten werden, dadurch gekennzeich net, daß zumindest dem/den Elektrolytraum(en) mit den metallischen Abscheidungen, insbesondere Zink, das Anion in oxidierter Form, insbesondere Brom, zugeführt wird/werden.

2. Verfahren nach Anspruch 1, dadurch gekennzeichnet, daß die Zufuhr des Anions in oxidierter Form bis zu vollständiger Auflösung der metallischen Schicht erfolgt.

3. Verfahren nach Anspruch 1 und 2, dadurch gekennzeichnet, daß mit der Zufuhr des Anions in oxidierter Form die Stromzu- bzw. - ableitung unterbrochen wird.

4. Verfahren nach Anspruch 1, 2 oder 3, dadurch gekennzeichnet, daß zumindest eine Elektrolytflüssigkeit in Umlauf gehalten wird.

5. Verfahren nach Anspruch 4, dadurch gekennzeichnet, daß dem/den Elektrodenraum(en) mit metallischer Abscheidung die Elektrolytflüssigkeit mit dem oxidierten Anion, insbesondere Brom, zugeführt wird/werden.

6. Verfahren nach einem der Ansprüche 1 bis 5, dadurch gekennzeichnet, daß die Temperatur der in den/die Elektrolytraum(e) mit metallischen Abscheidungen ein- und austretenden Elektrolytflüssigkeit bestimmt wird.

7. Verfahren nach einem der Ansprüche 1 bis 6, dadurch gekennzeichnet, daß bei zwei oder mehreren elektrisch zueinander parallelgeschalteten Akkumulatoren bzw. Zellenpaketen zumindest ein Akkumulator bzw. Zellenpaket zum Abbau der Abscheidung von den übrigen elektrisch isoliert wird.

## Claims

1. A method of decomposing uneven precipitations, e.g., different thicknesses of a metallic layer on electrodes of an accumulator,
in particular a zinc-bromine accumulator, the said precipitations being such as become precipitated during the storage of current and enter at least partly into solution in the electrolytes during the drawing of current, the liquid electrolytes being kept in circulation during the storage and the drawing of current, characterized in that to at least that/those electrolyte space(s) which has/have the metallic precipitations of zinc in particular, is fed the anion of bromine in particular, in an oxidized form.

2. A method as in Claim 1, characterized in that
the feed of the anion in an oxidized form continues until the metallic layer is completely dissolved.

3. A method as in Claim I and 2, characterized in that
the flow of the current in or out is interrupted by the feed of the anion in an oxidized form.

4. A method as in Claim 1, 2 or 3, characterized in that
at least one liquid electrolyte is kept in circulation.

5. A method as in Claim 4, characterized in that
to that/those electrolyte space(s) which has/have the metallic precipitation is fed the liquid electrolyte with the oxidized anion of bromine in particular.

6. A method as in one of the Claims 1 to 5, characterized in that
the temperature of the liquid is determined, of the electrolyte entering and leaving that/those electrolyte space(s) which has/have the metallic precipitations.

7. A method as in one of the Claims 1 to 6, characterized in that
with two or more accumulators or cell- packs connected electrically in parallel with one another at least one accumulator or cell- pack is electrically insulated for decomposing the precipitation from the others.

## Revendications

1. Procédé de dissolution de dépôts irréguliers, par exemple d'épaisseurs différentes d'une couche métallique, sur des électrodes d'un accumulateur, notamment d'un accumulateur zinc-brome, lesdits dépôts étant formés lors du passage de courant de charge et étant dissous au moins partiellement lors du passage de courant de décharge, les électrolytes liquides étant maintenus en circulation lors de la charge et de la décharge, caractérisé par le fait que l'on amène l'anion, notamment du brome, sous forme oxydée, au moins dans le/les compartiment(s) à électrolyte où sont les dépôts métalliques notamment ceux en zinc.

2. Procédé selon revendication 1, caractérisé par le fait que l'amenée d'anion sous forme oxydée s'effectue jusqu'à dissolution complète de la couche métallique.

3. Procédé selon revendications 1 à 2, caractérisé par le fait que l'apport ou le prélèvement de courant est interrompu avec l'amenée d'anion sous forme oxydée.

4. Procédé selon revendication 1, 2 ou 3, caractérisé par le fait qu'au moins un électrolyte liquide est maintenu en circulation.

5. Procédé selon revendication 4, caractérisé par le fait que le liquide électrolytique avec l'anion oxydé, notamment le brome, est amené dans le/les compartiment(s) à électrolyte où il y a du dépôt métallique.

6. Procédé selon l'une des revendications 1 à 5, caractérisé par le fait que l'on détermine la température de l'électrolyte liquide entrant et sortant dans le ou les compartiment(s) à électrolyte où sont les dépôts métalliques.

7. Procédé selon l'une des revendications 1 à 6, caractérisé par le fait que, dans le cas où il s'agit de deux ou plusieurs accumulateurs ou groupes de cellules électriquement reliés en parallèle, au moins un accumulateur ou groupe de cellules est isolé des autres, pour dissoudre le dépôt.
